# EUROPÄISCHE PATENTSCHRIFT

(11) **EP 2 238 420 B1**
(45) Veröffentlichungstag und Bekanntmachung des Hinweises auf die Patenterteilung: **25.07.2018**
(21) Anmeldenummer: 08851902.0
(22) Anmeldetag: 24.11.2008
(51) Int. Cl.: G01L 5/00, G01L 1/22

(54) **DEHNUNGSMESSSTREIFEN-ROSETTE ZUR EIGENSPANNUNGSMESSUNG**
STRAIN GAUGE ROSETTE FOR INTERNAL STRESS MEASUREMENT
JAUGE EXTENSOMÉTRIQUE EN ROSETTE POUR MESURE DE CONTRAINTE INTERNE

(30) Priorität: 23.11.2007 DE 102007056443
(43) Veröffentlichungstag der Anmeldung: 13.10.2010
(73) Patentinhaber: Hottinger Baldwin Messtechnik GmbH, 64293 Darmstadt (DE)
(72) Erfinder: KLEIN, Sebastian, 81925 München (DE); KLECKERS, Thomas, 64347 Griesheim (DE)
(74) Vertreter: Staudte, Ralph
(86) Internationale Anmeldenummer: PCT/EP2008/009936
(87) Internationale Veröffentlichungsnummer: WO 2009/065615

(56) Entgegenhaltungen:
- DD-A1- 269 908
- DE-A1- 2 345 309
- DE-A1- 2 558 768
- GB-A- 1 351 859
- OWENS A ET AL: "IN-SITU STRESS DETERMINATION USED IN STRUCTURAL ASSESSMENT OF CONCRETE STRUCTURES" STRAIN, BLACKWELL PUBLISHING LTD., MALDEN, MA, US, Bd. 29, Nr. 4, 1. November 1993 (1993-11-01), Seiten 115-123, XP000412652 ISSN: 0039-2103
- KEIL S: "ON-LINE EVALUATION OF MEASUREMENT RESULTS DURING THE DETERMINATION OF RESIDUAL STRESS USING STRAIN GAGES" REPORTS IN APPLIED MEASUREMENT, HOTTINGER BALDWIN MESSTECHNIK. DARMSTADT, DE, Bd. 9, Nr. 1, 1. Januar 1995 (1995-01-01), Seiten 15-20, XP000521573 ISSN: 0930-7923

## Beschreibung

Die Erfindung betrifft eine Messanordnung zur Eigenspannungsmessung an Werkstücken.

Bei bestimmten Werkstücken oder Bauteilen ist es häufig notwendig, festzustellen, ob darin Eigenspannungen vorhanden sind und welche Größe und Richtung diese aufweisen. Unter Eigenspannungen werden dabei Spannungen in einem Bauteil verstanden, die ohne äußere mechanische Beanspruchung wirksam sind und einem räumlich homogenen und zeitlich konstanten Temperaturfeld unterliegen.

Zur Messung von derartigen Eigenspannungen gibt es verschiedene Prüfverfahren, mit denen der Eigenspannungszustand an der Oberfläche und im Werkstoffinneren ermittelt werden kann. Im oberflächennahen Bereich bis zu einer Tiefe von einigen Millimetern wird häufig das Bohrlochverfahren eingesetzt. Dabei wird an einer bestimmten Stelle des Bauteils, an dem die Eigenspannungen bestimmt werden sollen, ein Loch gebohrt, dessen Durchmesser und Bohrtiefe sich nach der Probendicke richten. Durch diese Bohrung wird ein Teil der im Material vorhandenen Eigenspannungen freigesetzt, wodurch in der Nähe des Bohrrandes messbare Verformungen auftreten.

Durch Messen dieser Verformungen im Bereich des Bohrloches kann dann auf die wirkenden Eigenspannungen geschlossen werden. Es müssen dazu beispielsweise durch Aufbringen von drei Dehnungsmessstreifen, die um das Bohrloch gruppiert sind, die Dehnungen in drei verschiedenen Richtungen ermittelt werden. Bei diesem Verfahren können jedoch nur relativ kleine Dehnungsmessstreifen verwendet werden, da nur in der unmittelbaren Umgebung des Bohrloches die weitgehende Analogie zwischen der Differenzdehnung und den ausgelösten Eigenspannungsanteilen besteht.

Ein derartiges Verfahren und eine dazu verwendete Dehnungsmessstreifen-Rosette sind aus der DE-OS 25 58 768 bekannt. Dabei besteht die Dehnungsmessstreifen-Rosette aus einer Trägerfolie, auf der drei Messgitter in den Winkelstellungen von 0°, 45° und 90° um einen zentralen Mittelpunkt angeordnet sind. Bei der Eigenspannungsmessung nach dem Bohrlochverfahren besteht die Schwierigkeit darin, dass das Werkstück genau in der Mitte der aufgeklebten Rosette anzubohren ist. Denn bei einer nicht zentrisch angebrachten Bohrung erfassen die dann in unterschiedlichen radialen Abständen angeordneten Dehnungsmessgitter abstandsabhängige Dehnungen, die dann zu Messfehlern führen. Deshalb wird die Dehnungsmessstreifen-Rosette mit deren Mittelpunkt genau zentriert auf eine Leiterplatte aufgeklebt, wobei in der Mitte der Leiterplatte eine Zentrierbuchse angelötet ist. In der Zentrierbuchse ist dabei eine zentrale Bohrung vorgesehen, in die ein Zentrierstift eingebracht wird. Die Dehnungsmessstreifen-Rosette wird dann auf dem zu prüfenden Werkstück aufgeklebt.

Zur genauen Einbringung der Bohrung wird dann eine spezielle Bohrvorrichtung aus einem U-förmigen Metallbügel mit einer Bohrerführung über der Dehnungsmessstreifen-Rosette angeordnet und durch einen Zentrierstift, der in der Zentrierbuchse eingesetzt wird, genau mittig zur Dehnungsmessstreifen-Rosette aufgesetzt. Nach dem Zentrieren wird dann der Zentrierstift aus der Bohrvorrichtung herausgenommen und der Schaft einer Bohrmaschine in die Bohrvorrichtung eingesetzt, um eine sehr genaue zentrische Bohrung zwischen den aufgeklebten Messgittern in das Werkstück einzubringen. Die dabei während des Bohrungsvorgangs ausgelösten Dehnungen werden dann von den Dehnungsmessstreifengittern in elektrische Signale umgesetzt, aus denen dann die Eigenspannungen errechenbar sind. Da nur in unmittelbarer Umgebung zum Bohrloch eine weitgehende Analogie zwischen der Differenzdehnung und den ausgelösten Eigenspannungsanteilen besteht, müssen die um das Bohrloch gruppierten Dehnungsmessstreifen relativ klein sein. Deshalb besitzen derartige Dehnungsmessstreifen-Rosetten häufig nur Durchmesser von ca. 10-15 mm, so dass schon geringe Exzentrizitäten relativ große Messfehler verursachen können. Auch mit der zuvor beschriebenen sehr aufwendigen Bohrvorrichtung lassen sich daher häufig die geforderten maximal zulässigen Exzentrizitäten von 0,02 mm nicht realisieren.

In dem Dokument Owens A. et al.: "In-situ stress determination used in structural assessment of concrete structures", Strain, Blackwell Publishing Ltd., Malden, MA, US, Bd. 29, Nr. 4, 1. November 1993, Seiten 115-123, XP000412652 ist eine Messanordnung nach dem Oberbegriff des Patentanspruchs 1 beschrieben.

Der Erfindung liegt die Aufgabe zugrunde, eine Messanordnung mit einer Dehnungsmessstreifen-Rosette zur Eigenspannungsmessung an Werkstücken nach dem Bohrlochverfahren so zu verbessern, dass damit sehr hohe Messgenauigkeiten erreichbar sind und dies mit einem möglichst geringen messtechnischen Aufwand realisierbar ist.

Diese Aufgabe wird durch die im Patentanspruch 1 angegebene Erfindung gelöst. Weiterbildungen und vorteilhafte Ausbildungsbeispiele der Erfindung sind in den Unteransprüchen angegeben.

Die Erfindung hat den Vorteil, dass durch die radial gegenüberliegend angeordneten Messgitter einer gemeinsamen Messrichtung die Messfehler durch geringe Exzentrizitäten weitgehend kompensiert werden können. Dazu müssen lediglich die Messsignale der gegenüberliegenden Messgitterpaare ermittelt werden, wodurch sich der Messfehler durch die Exzentrizität der Bohrung vorteilhafterweise um einen Faktor bis zu 20 verbessern lässt.

Die Erfindung hat weiterhin den Vorteil, dass sich bei einer derartigen Messanordnung mit einer Dehnungsmessstreifen-Rosette mit zwei gegenüberliegenden Messgittern einer Messrichtung der Mittelwert mit Hilfe einer einfachen Reihen- oder Parallelschaltung oder einfachen arithmetischen Mitteln erreichen lässt, so dass dafür kein nennenswerter messtechnischer oder apparativer Aufwand notwendig ist.

Die Erfindung hat zusätzlich den Vorteil, dass lediglich durch eine Verdopplung der Messgitter auf einer ansonsten gleichartigen Dehnungsmessstreifen-Rosette auf einfache Weise die Messgenauigkeit um ein Vielfaches verbessert werden kann, ohne dass der Aufwand zum zentrischen Einbringen der Bohrung erhöht werden müsste. Dabei ist der Mehraufwand zur Verdopplung der Messgitter auf einer ansonsten gleichartigen Rosettenanordnung verhältnismäßig gering, da die Messgitter vollautomatisch durch einen gemeinsamen Ätzvorgang auf einer sonst gleichartigen Trägerfolie hergestellt werden. Deshalb ist auch mit derartig kostengünstig hergestellten Dehnungsmessstreifen-Rosetten vorteilhafterweise eine Erhöhung der Messgenauigkeit zu erzielen, obgleich sich der Aufwand der Zentriergenauigkeit verringern lässt.

Die Erfindung wird anhand eines Ausführungsbeispiels, das in der Zeichnung dargestellt ist, näher erläutert. Es zeigen:
Fig. 1 eine Sechs-Messgitter-Bohrlochrosette;
Fig. 2 eine Verschaltungsfolie für eine Sechs-Messgitter-Bohrlochrosette; und
Fig. 3 eine Acht-Messgitter-Bohrlochrosette.

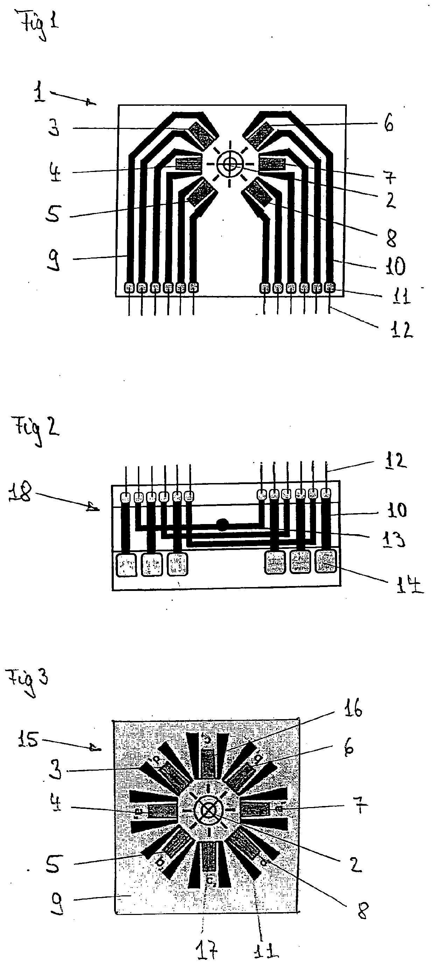

In Fig. 1 der Zeichnung ist eine Dehnungsmessstreifen-Rosette 1 als Bohrlochrosette dargestellt, bei der im gleichen radialen Abstand um eine auch als Bohrlochmarkierung oder Zentriermarkierung bezeichnete Bohrlochzentrierung 2 drei gleichartige Messgitter 3, 4, 5 in einem Winkelabstand von 45° angeordnet sind, denen jeweils ein zugeordnetes gleichartiges Messgitter 6, 7, 8 symmetrisch zur Bohrlochzentrierung 2 gegenüberliegt.

Die Dehnungsmessstreifen-Rosette 1 besteht dabei aus einer Kunststoffträgerschicht 9, auf der sechs herkömmliche mäanderförmige Messgitter 3, 4, 5, 6, 7, 8 aufgebracht sind. Alle Messgitter 3, 4, 5, 6, 7, 8 sind dabei konzentrisch um die mittige Bohrlochmarkierung 2 angeordnet. Dabei sind die drei linksseitigen Messgitter 3, 4, 5 oder rechtsseitigen Messgitter 6, 7, 8 wie übliche Drei-Messgitter-Bohrlochrosetten um die Bohrlochmarkierung 2 vorgesehen, wobei alle Messgitter 3, 4, 5, 6, 7, 8 einen gleichen radialen Abstand zur Bohrlochmarkierung 2 aufweisen. Die drei linksseitigen Messgitter 3, 4, 5 sind dabei in drei verschiedene Richtungen zwischen 0° und 90° ausgerichtet. Zwischen den Messgittern 3, 4, 5 ist ein gleicher Winkel von 45° vorgesehen, so dass die drei linksseitigen Messgitter 3, 4, 5 einen Winkelbereich von 90° abdecken.

Eigenspannungen an Werkstücken oder Bauteilen können durch innere oder äußere Kräfte entstehen, die am Werkstück angreifen. Die durch die Kräfte bedingten Formänderungen sind durch Längs- und Querverschiebungen gekennzeichnet. Den inneren Kräften im Werkstück entsprechen die drei auf die Flächeneinheit bezogenen Spannungen. Die Spannungszustände können ein-, zwei- oder dreiachsig sein, wobei die Verformungszustände stets dreiachsig sind. Deshalb ist es notwendig, solange die Hauptdehnungsrichtungen nicht bekannt sind, drei in verschiedene Richtungen ausgerichtete Messgitter 3, 4, 5 vorzusehen, um die Verformungszustände zu erfassen. Da aus den erfassten Dehnungsänderungen rechnerisch auf die Eigenspannung geschlossen werden kann, ist im Grunde die jeweilige Ausrichtung der Messgitter 3, 4, 5 unbedeutend, so dass auch Anordnungen von 0°, 90° und 135° oder 0°, 60° und 120° vorkommen. Allerdings müssen die drei Messgitter 3, 4, 5 immer in unterschiedliche Richtungen ausgerichtet sein, so dass ein Winkelversatz von 180° zwischen zwei Messgittern einer Rosette bisher bei Bohrlochrosetten nicht bekannt war.

Für den Sonderfall, dass z. B. die Eigenspannung in einer der Hauptspannungsrichtungen bekannt ist, könnte die Eigenspannungsmessung ausnahmsweise auch mit nur zwei in abweichende Richtungen ausgerichteten Messgittern um ein Bohrloch erfasst werden. Dies ist praktisch aber nicht relevant, so dass bisherige Bohrlochrosetten mindestens drei Messgitter aufweisen, deren Winkelabstände immer < 180° sind. Deshalb werden mit der dargestellten Sechs-Messgitter-Bohrlochrosette 1 die Dehnungen in den drei Hauptdehnungsrichtungen von 0°, 45° und 90° erfasst. Dies erfolgt gleichermaßen durch die drei linksseitigen Messgitter 3, 4, 5 als auch durch die drei rechtsseitigen Messgitter 6, 7, 8, die sich spiegelsymmetrisch gegenüberliegen und deshalb einen gleichen Abstand zum Bohrlochmittelpunkt und den zugeordneten gegenüberliegenden Messgittern aufweisen. Da alle sechs Messgitter 3, 4, 5, 6, 7, 8 gleichartig ausgebildet sind, müssten die jeweils 180° gegenüberliegenden Messgitterpaare 3, 8; 4, 7; 5, 6 während des Bohrvorgangs im Grunde die gleiche Dehnung erfassen, da sie in derselben Hauptdehnungsrichtung ausgerichtet sind.

Diese Tatsache nutzt die Erfindung nun, um unvermeidbare Bohrlochtoleranzen und damit Messungenauigkeiten durch eine exzentrische Bohrlochanordnung zu korrigieren. Denn bei den derzeit geforderten Messgenauigkeiten sind teilweise nur maximal zulässige Exzentrizitäten von 0,02 mm tolerierbar, die mit herkömmlichen Bohrzentrierverfahren nur unter großem messtechnischem Aufwand erreichbar sind. Wegen des Einflusses auf die zu erfassenden Eigenspannungen sind auch mechanische Bohrzentrierungen wie Ankörnen und dergleichen nicht gestattet, so dass in der Praxis meist nur Exzentrizitäten von > 0,02 mm erreichbar sind.

Deshalb schlägt die Erfindung vor, für mindestens jede zu erfassende Hauptdehnungsrichtung zwei 180° gegenüberliegende gleichartige Messgitter 3, 8; 4, 7; 5, 6 auf einer Dehnungsmessstreifen-Rosette vorzusehen, deren Abweichung aufgrund der Exzentrizität des Bohrlochs durch eine Mittelwertbildung weitgehend kompensierbar ist. Dazu ist es dann aber notwendig, die erfassten Dehnungsmesswerte einer Hauptdehnungsrichtung zu mitteln, um den dadurch verursachten Fehler zu minimieren. Dies gelingt zwar nicht vollständig, da die errechenbaren Eigenspannungen nicht proportional zum Abstand des Bohrlochs verlaufen, so dass ein Restfehler verbleibt. Praktische Versuche haben allerdings bei einer höchstmöglichen Exzentrizitätsgenauigkeit von z. B. 0,02 mm eine Verbesserung der Messgenauigkeit um den Faktor 20 ergeben. Bei einer Verringerung des Aufwands waren mit einem einfachen Bohrzentrierverfahren noch Exzentrizitäten von z. B. 0,1 mm erreichbar, die bei der erfindungsgemäßen Bohrlochrosette 1 noch eine Verbesserung der Messgenauigkeit um den Faktor 8 gegenüber der höchstmöglichen maximal zulässigen Exzentrizität einer einfachen Bohrlochrosette mit nur drei vergleichbaren Messgittern ergaben.

Zur entsprechenden Mittelwertbildung der beiden 180° gegenüberliegend angeordneten Messgitter 3, 8; 4, 7; 5, 6 schlägt die Erfindung drei verschiedene Verfahren vor. Vorzugsweise kann die Mittelwertbildung durch eine Reihenschaltung der jeweils gegenüberliegenden und zugeordneten beiden Messgitter 3, 8; 4, 7; 5, 6 erreicht werden. In Fig. 2 der Zeichnung ist eine derartige separate Verschaltungsfolie 18 dargestellt. Dabei wird die Verschaltungsfolie 18 mit den zu den Anschlusspunkten 11 herausgeführten Anschlussleiterbahnen 10 der Dehnungsmessstreifen-Rosette über z. B. Kupferdrähte 12 verbunden. Dabei enthält die Verschaltungsfolie 18 bereits fest verdrahtete Leiterbahnenbrücken 13, durch die die 180° gegenüberliegend angeordneten Messgitterpaare 3, 8; 4, 7; 5, 6 einer Hauptdehnungsrichtung in Reihe geschaltet werden. Ausgangsseitig sind dann nur noch sechs Messleitungspunkte 14 vorhanden, wie bei einer herkömmlichen Bohrlochrosette mit drei Messgittern.

Allerdings können die sechs Messgitter 3, 4, 5, 6, 7, 8 auch auf herkömmliche Art mittels der zwölf Anschlusspunkte 11 der Sechs-Messgitter-Bohrlochrosette 1 in Reihe geschaltet werden, um als Ausgangssignale jeweils den Mittelwert einer Dehnungsrichtung zu erhalten.

Eine derartige feste Verschaltung könnte aber auch direkt auf der Trägerfolie 9 der Bohrlochrosette 1 vorgesehen werden. Da sich die Leiterbahnen 10 dabei aber kreuzen würden, ist dies nur durch eine gestapelt aufgebaute Bohrlochrosette 1 möglich.

Eine Mittelwertbildung könnte aber auch durch eine Parallelschaltung der zugeordneten 180° gegenüberliegend angeordneten Messgitterpaare 3, 8; 4, 7; 5, 6 einer Dehnungsrichtung erreicht werden. Da die Messsignale jedes Messgitters 3, 4, 5, 6, 7, 8 häufig nach der Verstärkung noch einem Analog-Digital-Wandler zugeführt werden, könnte dies nachfolgend auch rechnerisch mittels einer einfachen Rechenschaltung durchgeführt werden. Dazu könnten dann bei größeren Exzentrizitäten noch Korrekturfaktoren vorgesehen werden, die die Nichtlinearität zur Bohrlochabweichung kompensieren.

Eine weitere Ausführung einer Dehnungsmessstreifen-Rosette ist in Fig. 3 der Zeichnung als Acht-Messgitter-Bohrlochrosette 15 dargestellt. Diese unterscheidet sich von der Sechs-Messgitter-Bohrlochrosette 1 lediglich durch ein weiteres Paar von gleichartigen Messgittern 16, 17, mit dem eine zusätzliche Dehnungsrichtung eines Werkstoffes erfasst werden kann. Dabei ist das zusätzliche Messgitterpaar 16, 17 in einem Winkelabstand von 45° zu den benachbarten Messgitterpaaren angeordnet. Dadurch wird vorzugsweise eine Verbesserung der Genauigkeit bei einer Exzentrizität erreicht, die sich bei der Sechs-Messgitter-Bohrlochrosette 1 in die gitterfreie Richtung erstreckt hätte. Des Weiteren erhöht sich die Messgenauigkeit auch schon durch die Erhöhung der Anzahl der auswertbaren Messsignale, insbesondere wenn sich die Hauptdehnungsrichtung in die zuvor nicht mit einem Messgitter versehene Richtung erstreckt. Darüber hinaus sind auch noch Bohrlochrosetten mit weiteren Messgitterpaaren ausführbar, soweit dies die Platzverhältnisse auf der Trägerschicht 9 bei den dicht am Bohrloch angeordneten Messgittern zulassen. Denn bei dem vorbeschriebenen Ausführungsbeispiel besitzen die beiden Bohrloch-Rosetten 1, 15 lediglich einen Durchmesser bzw. eine Kantenlänge von vorzugsweise 12 mm. Deshalb bietet sich eine Erhöhung der Messgitteranzahl über acht vorzugsweise nur bei größeren Bohrlochdurchmessern an. Denn beim Bohrlochverfahren richten sich der Bohrlochdurchmesser und die Bohrlochtiefe in erster Linie nach der Analysetiefe, so dass nicht immer nur kleine Bohrlochdurchmesser ausreichen.

## Patentansprüche

1. Messanordnung zur Messung von Eigenspannungen in Werkstücken nach dem Bohrlochverfahren mit einer Dehnungsmessstreifen-Rosette (1; 15), die aufweist:
- eine Zentriermarkierung (2),
**dadurch gekennzeichnet, dass**
- mindestens drei Messgitter (3, 4, 5, 16) innerhalb eines Winkelbereiches von 0° bis < 180° in gleichem radialem Abstand und verschiedenen Richtungen um die Zentriermarkierung (2) angeordnet sind, wobei jedem der mindestens drei Messgitter (3, 4, 5, 16) jeweils ein gegenüberliegendes in gleicher Richtung ausgerichtetes gleichartiges Messgitter (6, 7, 8, 17) zugeordnet ist, das den gleichen radialen Abstand wie das gegenüberliegende Messgitter zur Zentriermarkierung (2) aufweist,
- die Messgitter (3, 4, 5, 6, 7, 8, 16, 17) auf einer gemeinsamen Trägerfolie (9) aufgebracht sind,
- die Zentriermarkierung (2) als mittige Bohrlochmarkierung auf der Trägerfolie (9) ausgebildet ist, und
- Anschlussleiterbahnen (10) der Messgitter (3, 4, 5, 6, 7, 8, 16, 17) auf der gemeinsamen Trägerfolie (9) oder einer separaten Trägerfolie als Verschaltungsfolie (18) so geführt oder verschaltet sind, dass die paarweise gegenüberliegenden Messgitter (3, 8; 4, 7; 5, 6; 16, 17) zur Mittelwertbildung in Reihe oder parallel geschaltet sind.

2. Messanordnung nach Anspruch 1, wobei die Dehnungsmessstreifen-Rosette als Sechs-Messgitter-Bohrlochrosette (1) ausgebildet ist, bei der drei gleichartige Messgitter (3, 4, 5) in einem Winkelabstand von 45° um die Bohrlochmarkierung als Zentriermarkierung (2) angeordnet sind, denen jeweils 180° gegenüberliegend drei weitere gleichartige Messgitter (6, 7, 8) angeordnet sind.

3. Messanordnung nach Anspruch 1, wobei die Dehnungsmessstreifen-Rosette als Acht-Messgitter-Bohrlochrosette (15) ausgebildet ist, bei der vier gleichartige Messgitter (3, 4, 5, 16) in einem Winkelabstand von 45° um die Bohrlochmarkierung als Zentriermarkierung (2) angeordnet sind, denen jeweils 180° gegenüberliegend vier weitere gleichartige Messgitter (6, 7, 8, 17) auf der gemeinsamen Trägerfolie (9) angeordnet sind.

4. Messanordnung nach einem der vorhergehenden Ansprüche, wobei die gemeinsame Trägerfolie (9) rund oder eckig ist und jedem Messgitter zwei herausgeführte Anschluss- oder Anlötpunkte (11) zugeordnet sind.

5. Messanordnung nach einem der vorhergehenden Ansprüche, wobei die Messgitter (3, 4, 5, 6, 7, 8, 16, 17) mindestens mittels 12 Anschlussleiterbahnen (10) zu mindestens zwölf Anschlusspunkten (11) auf einer Längsseite der Trägerfolie (9) herausgeführt sind.

6. Messanordnung nach einem der vorhergehenden Ansprüche, wobei die Verschaltung der Messgitter (3, 4, 5, 6, 7, 8, 16, 17) durch Leiterbahnenbrücken (13) oder sich kreuzende gestapelte Leiterbahnen vorgesehen ist.

7. Messanordnung nach Anspruch 4 oder 5, wobei die Anschlusspunkte (11) mit der als separate Verschaltungsfolie ausgebildeten Verschaltungsfolie (18) verbunden sind und wobei die Verschaltungsfolie (18) Leiterbahnen (10) enthält, die mit Leiterbahnenbrücken (13) zu einer Reihen- oder Parallelschaltung der gegenüberliegenden Messgitter (3, 8; 4, 7; 5, 6; 16, 17) versehen sind und zu sechs oder acht Messleitungspunkten (14) herausgeführt sind.

## Claims

1. Measuring arrangement for measuring internal stress in workpieces according to the borehole method, comprising a strain gauge rosette (1; 15) having:
- a centring mark (2),
**characterised in that**
- at least three measuring grids (3, 4, 5, 16) are arranged radially equally spaced and in different directions within an angular range of 0° to < 180° about the centring mark (2), wherein each of the at least three measuring grids (3, 4, 5, 16) is associated with an opposite measuring grid (6, 7, 8, 17) of similar type aligned in the same direction and having the same radial spacing from the centring mark (2) as the opposite measuring grid,
- the measuring grids (3, 4, 5, 6, 7, 8, 16, 17) are mounted on a common backing film (9),
- the centring mark (2) is provided in the form of a borehole marking centrally arranged on the backing film (9), and
- connection paths (10) of the measuring grids (3, 4, 5, 6, 7, 8, 16, 17) are arranged or connected on the common backing film (9), or on a separate backing film as an interconnection foil (18), in such a way that the pairs of opposite measuring grids (3, 8; 4, 7; 5, 6; 16, 17) are connected in series or in parallel so that values are averaged.

2. The measuring arrangement according to claim 1, wherein the strain gauge rosette is configured as a six-grid borehole rosette (1), in which three measuring grids (3, 4, 5) of similar type are arranged with an angular spacing of 45° from each other around the borehole marking as centring mark (2), with three more measuring grids (6, 7, 8) of similar type being respectively arranged oppositely at 180° thereto.

3. The measuring arrangement according to claim 1, wherein the strain gauge rosette is configured as an eight-grid borehole rosette (15), in which four measuring grids (3, 4, 5, 16) of similar type are arranged with an angular spacing of 45° from each other around the borehole marking as centring mark (2), with four more measuring grids (6, 7, 8, 17) of similar type being respectively arranged oppositely at 180° thereto on the common backing film (9).

4. The measuring arrangement according to any one of the preceding claims, wherein the common backing film (9) is round or polygonal and each measuring grid is assigned two connection or soldering points (11) at respective terminal ends of two connection paths.

5. The measuring arrangement according to any one of the preceding claims, wherein the measuring grids (3, 4, 5, 6, 7, 8, 16, 17) are connected by means of at least 12 connection paths (10) to at least twelve connection points (11) on a longitudinal side of the backing film (9).

6. The measuring arrangement according to any one of the preceding claims, wherein the measuring grids (3, 4, 5, 6, 7, 8, 16, 17) are connected by conductor path bridges (13) or by stacked criss-crossing conductor paths.

7. The measuring arrangement according to claim 4 or 5, wherein the connection points (11) are connected to the interconnection foil (18) provided as a separate interconnection foil and wherein the interconnection foil (18) contains conductor paths (10), which are provided with conductor path bridges (13) for connecting the opposite measuring grids (3, 8; 4, 7; 5, 6; 16, 17) in series or in parallel and which lead to six or eight measuring line terminals (14).

## Revendications

1. Dispositif de mesure de contrainte interne dans des pièces à usiner par procédé de perçage de trous et au moyen d'une jauge extensométrique de type rosette (1; 15), le dispositif comprenant:
- une marque de centrage (2),
**caractérisé en ce que**
- au moins trois grilles de mesure (3, 4, 5, 16) sont disposées à une même distance radiale et dans différentes directions autour de la marque de centrage (2) à l'intérieur d'une plage angulaire allant de 0° à < 180°, une grille de mesure (6, 7, 8, 17) opposée du même type et orientée dans la même direction étant respectivement associée à chacune des au moins trois grilles de mesure (3, 4, 5, 16) et se trouvant à la même distance radiale de la marque de centrage (2) que la grille de mesure opposée,
- les grilles de mesure (3, 4, 5, 6, 7, 8, 16, 17) sont appliquées sur un film de support commun (9),
- la marque de centrage (2) est réalisée sous forme de marque de trou de perçage centrale sur le film de support (9), et
- des pistes conductrices de connexion (10) des grilles de mesure (3, 4, 5, 6, 7, 8, 16, 17) sur le film de support commun (9) ou sur un film de support séparé en tant que film d'interconnexion (18) sont guidées ou connectées de telle sorte que les grilles de mesure (3, 8; 4, 7; 5, 6; 16, 17) disposées par paires les unes face aux autres soient connectées en série ou en parallèle pour la formation d'une moyenne.

2. Dispositif de mesure selon la revendication 1, la jauge extensométrique de type rosette étant réalisée sous forme de rosette de trou de perçage à six grilles de mesure (1), dans laquelle trois grilles de mesure (3, 4, 5) du même type sont disposées à une distance angulaire de 45° autour de la marque de trou de perçage en tant que marque de centrage (2) et font respectivement face à 180° à trois autres grilles de mesure (6, 7, 8) du même type.

3. Dispositif de mesure selon la revendication 1, la jauge extensométrique de type rosette étant réalisée sous forme de rosette de trou de perçage à huit grilles de mesure (15), dans laquelle quatre grilles de mesure (3, 4, 5, 16) du même type sont disposées à une distance angulaire de 45° autour de la marque de trou de perçage en tant que marque de centrage (2) et font respectivement face à 180° à quatre autres grilles de mesure (6, 7, 8, 17) du même type disposées sur le film de support commun (9).

4. Dispositif de mesure selon l'une des revendications précédentes, dans lequel le film de support commun (9) est de forme arrondie ou angulaire et deux points de connexion (11) ou de brasage (11) sortants sont associés à chaque grille de mesure.

5. Dispositif de mesure selon l'une des revendications précédentes, dans lequel les grilles de mesure (3, 4, 5, 6, 7, 8, 16, 17) sont guidées sur un côté longitudinal du film de support (9) vers au moins douze points de connexion (11) sortants, au moins au moyen de 12 pistes conductrices de connexion (10).

6. Dispositif de mesure selon l'une des revendications précédentes, dans lequel il est prévu l'interconnexion des grilles de mesure (3, 4, 5, 6, 7, 8, 16, 17) au moyen de ponts de piste conductrice (13) ou par empilement de pistes conductrices qui s'entrecroisent.

7. Dispositif de mesure selon la revendication 4 ou 5, dans lequel les points de connexion (11) sont reliés au film d'interconnexion (18) réalisé sous forme de film d'interconnexion séparé et dans lequel le film d'interconnexion (18) contient des pistes conductrices (10), lesquelles sont pourvues de ponts de piste conductrice (13) pour une connexion en série ou en parallèle des grilles de mesure opposées (3, 8; 4, 7; 5, 6; 16, 17) et lesquelles sont guidées vers six ou huit points de ligne de mesure (14) sortants.
